# EUROPEAN PATENT SPECIFICATION

(11) **EP 2 092 191 B1**
(45) Date of publication and mention of the grant of the patent: **14.09.2011**
(21) Application number: 07766622.0
(22) Date of filing: 12.07.2007
(51) Int. Cl.: F03D 1/06, F03D 7/02, F03D 11/00

(54) **RETRACTABLE ROTOR BLADE STRUCTURE**
EINZIEHBARE ROTORSCHAUFELSTRUKTUR
STRUCTURE RÉTRACTABLE DE PALE DE ROTOR

(30) Priority: 21.07.2006 US 832551 P
(43) Date of publication of application: 26.08.2009
(73) Proprietor: Clipper Windpower, Inc., Carpinteria CA 93013 (US)
(72) Inventor: DEHLSEN, James, G., P., Montecito, CA 93108 (US)
(74) Representative: Zenz
(86) International application number: PCT/IB2007/001969
(87) International publication number: WO 2008/012615

(56) References cited:
- EP-A- 1 507 084
- WO-A-03/036082
- WO-A-2005/017351
- DE-A1- 4 428 731
- JP-A- 57 032 074
- US-A1- 2003 223 868

## Description

### BACKGROUND OF THE INVENTION

### Field of the Invention

This invention relates to electric power-generating devices, such as wind turbines and ocean current turbines, and more particularly to a structural support for a wind turbine blade which has a detachable outer aerodynamic module with a telescoping feature which, when extended out, increases the rotor diameter and captures more wind energy during periods of lower winds, and telescopes in (retracts) to reduce wind energy exposure in higher winds.

### Description of the Prior Art

Patent 3,606,571 of Wood entitled "Stowed Rotor" granted September 20, 1971, describes a stowed rotor mounted atop the fuselage of an airplane. The rotor includes a rotatable housing unit mounted on a vertical shaft and provided with a pair of rotor blade units that telescope into the housing unit. A mechanism is provided to extend and retract the rotor blade units from the housing unit, for the purpose of providing vertical lift during takeoff and vertical landing. The rotor blades are mechanically coupled together so that operation of one rotor blade is necessarily accompanied by duplicate and identical operation of the other rotor blade unit to thereby avoid unbalanced application of lifting and inertia forces. For opposing the reaction of the rotor blade assembly (yaw), a propeller is provided on the tail of the aircraft as in conventional helicopters.

The Wood patent is concerned with a stowed rotor arrangement for producing vertical lift for an aeronautical vehicle. The housing unit is mounted on the vehicle and rotatable about an axis, which is in general alignment with the direction of lift, using a pair of rotor blades telescopically mounted in the housing unit and disposed in generally transverse relation to the axis of rotation of the housing unit.

Wind and water current applications are not concerned with producing vertical lift for an aeronautical vehicle. On the contrary, in wind and current systems the rotors are mounted on a stationary structure and are rotatable about an axis, which is in general alignment with the direction of the wind or water current. In Wood, the housing unit is mounted on the vehicle and rotatable about an axis, which is in general alignment with the direction of lift, not in alignment with the wind or water current. In wind and water current applications the rotors are employed in a fundamentally different way to achieve a fundamentally different result. That is, the rotors are in alignment with the wind or water with the result that the rotors are moved by the current to produce electricity. In Wood, the rotors are in alignment with the direction of lift with the result that the rotors are moved by an engine to produce vertical lift. Wood describes a mechanism for a variable diameter rotor for aerospace applications wherein the rotor is driven by an engine and moves perpendicularly with respect to the flowing medium. Wood does not address the requirements of a wind or ocean current application, wherein the rotors are in alignment with and are driven by a flowing medium and do not move with respect to the flowing medium.

Patent 3,814,351 of Bielawa entitled "Coaxial Rotor Yaw Control" granted June 4, 1974, discloses coaxial counterrotating rotors having telescoping blade tip portions which are normally partially extended. The blades of the upper and lower rotors can be differentially extended and retracted to create a resultant net torque between the rotors. The purpose is to provide yaw control by providing telescoping blade tip portions, which are differentially operated by a pilot-operated cable system that extends the tip portions of one rotor while retracting the tip portions of the other rotor.

Each blade is comprised of a hollow spar, which forms the leading edge and is the main strength member of the blade and a tapered trailing edge portion, which completes the airfoil contour of the blade. Each blade has a tip portion of reduced chord which has one end inserted into a cavity in the outboard end of the blade spar in which it is freely slidable. The tip portion is supported by two rollers on the spar, mounted at spaced points along its leading edge on pivots and by rollers mounted on pivots carried by the spar in position to engage the top and bottom tapered surfaces of the tip portion adjacent its trailing edge.

The extension and retraction of each tip portion of the upper rotor is controlled by a cable or flexible strap which is attached to the inboard end of the tip portion and passes through the hollow spar to a pulley mounted in the rotor hub by which the cable is directed downward through the hollow drive shaft. Inside the drive shaft three cables from three blades of the upper rotor are combined into a single cable. The tip portions of the lower rotor are similarly controlled by cables.

To obtain yaw control a rudder pedal is depressed which extends one of cables, and retracts the other, causing cable spools to rotate in opposite directions, one to wind up the cable(s) on one cable reel and the other to slacken its cable(s). The cables are held taut at all times by the rotating tip portions which are constantly urged outward regardless of their axial position by centrifugal forces generated by the rotating blades which are driven by the helicopter's engine.

The Bielawa patent does not address problems that arise with respect to an extendable rotor blade system that is fixed with respect to the flowing medium, whether the medium is air or water or any other fluid-flow medium.

The above prior art references describe mechanisms for aerospace applications wherein the rotor is driven by an engine and moves with respect to the flowing medium. These references do not address the requirements of a wind or ocean current applications, wherein the rotor is driven by a flowing medium and does not move with respect to the flowing medium and where durability and fatigue resistance are paramount to the success of such system, and wherein forces acting upon the rotor vary significantly during each revolution.

The mechanisms suggested in the prior art for controlling variable diameter rotors for tilt rotors and aircraft are susceptible to fatigue failures and require extensive maintenance. Wind turbines and ocean current turbines operate in environmental conditions that can quickly degrade the properties of an extension mechanism. The high maintenance requirement translates to higher energy cost, which results in a less competitive renewable energy system.

United States Patent 4,710,101 to Jamieson entitled " Wind Turbine" granted December 1, 1987, discloses a wind turbine in which movable nose portions are located at or adjacent the leading edge of the blade and at or adjacent the tip of the blade. The nose portions are displaceable longitudinally of the blade, i.e. radially outwardly of the blade, from a normal retracted position. This moveable portion contributes to the lift of the airfoil section, and is moved to an advanced position in which drag is produced, to prevent unwanted increase in the speed of the rotation of the rotor.

The movable portion when in the normal, retracted position, will have little harmful effect on the aerodynamic shape of the airfoil section, the flow lines of the air passing from the movable portion extremely smoothly onto the remainder of the airfoil section.

The leading face of the remainder of the airfoil section has a flat or concave surface to increase the drag effect when the movable portion is in the advanced position. Further to increase the drag effect, bleed passages may lead from the leading faces of the remainder of the airfoil sections, which are exposed when the movable portions are moved to the advanced position. This bleed passages can extend to a major surface of the remainder of the respective airfoil section, to cause air to flow from the leading face to said major surface to cause separation of flow and increase drag. The portion exposed may in fact include part of the operating mechanism of the movable portion, which would even further increase the drag effect.

When the speed of rotation of the rotor reaches a value, which is the maximum value, which can be tolerated, the nose portions move radially outwardly. The nose portions move either under the action of centrifugal force against the return force of springs, or together with assistance from actuators, and the leading faces are exposed. The outward movement of the nose portions will itself cause an effective reshaping of the cross-section of the blades so they do not resemble an airfoil section at all, at the tip of the blade. This destroys lift on a section of the blade where the most power is produced. It will create much more drag on the exposed section, that is the leading face, which may be contoured or roughened to produce maximum drag. The displaced nose sections create drag at a radius beyond the normal position of the tip, where the velocity is higher and the effectiveness is greater.

The present invention is concerned with the opposite effect: increasing the length of the rotor blade to improve efficient airflow over the outer extremity of the blade to increase its effectiveness in driving the rotor without introducing drag or braking.

Patent 5,630,705 of Eikelenbloom entitled "Rotor Construction of Windmill" granted May 20, 1997 discloses a device for converting wind flow energy into mechanical energy. The device has a base construction and a rotor with a horizontal axis mounted on the base. The rotor has a number of elongated rotor blades, which are connected to a rotary support and extend radially therefrom. Each rotor blade or a part thereof is connected to the rotor support by a hinge connection for tilting the longitudinal axis of the rotor blade or part thereof to a predetermined orientation relative to the axis of rotation of the support. A hinge axis of the hinge connection between the rotor blade and the rotary support is directed at an acute angle both to the longitudinal axis of the rotor blade and to the axis of rotation of the support.

The maximum wind-braking area, to be used at relatively low wind speeds, is achieved when the rotor blades are at right angles to the wind direction, while pivoting the rotor blades away in the wind direction and pivoting the rotor blades around their longitudinal axes results in a lower wind-braking area to be used a relatively high wind speeds.

In order to increase the adjustability of the wind-breaking area to the actual wind speed, the rotor blades are formed by a number of elongated rotor blade parts, which are adapted to be placed in a position fully or partially overlapping each other in the lengthwise direction, or essentially in line with each other. For a minimum length of such a rotor blade, the component parts of the rotor blade fully overlap each other. A maximum length of such a rotor blade is achieved if all component rotor blade parts are placed in line with each other.

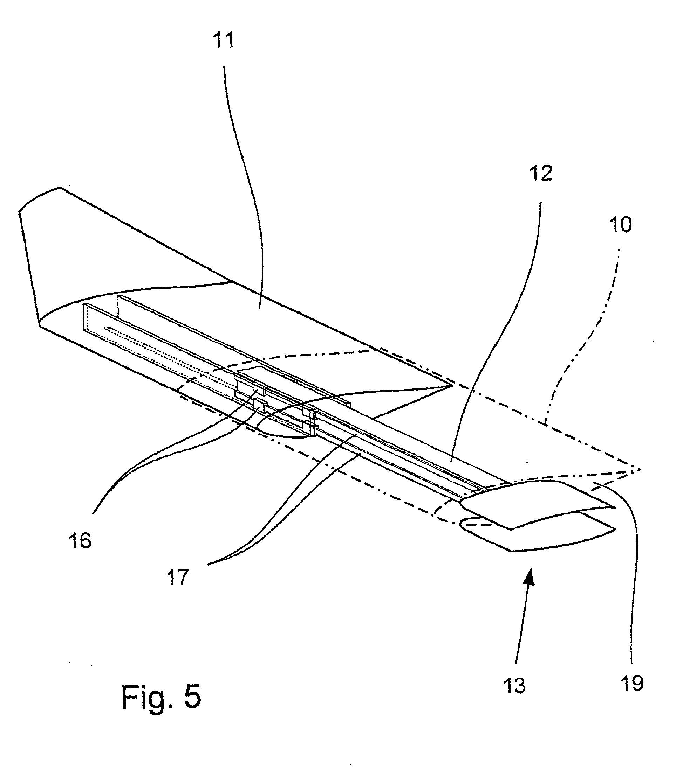

FIGURE 5 of Eikelenboom illustrates an elongated, hollow first rotor blade part that is hingedly connected to an arm. The first rotor blade part contains an elongated, hollow second rotor blade part. The second rotor blade part can in turn contain an elongated third rotor blade part. The rotor blade parts can be shifted relative to each other in the lengthwise direction by separate mechanisms including a motor drive, a spindle and a wire cable for each moveable part fitted in the first rotor blade part. The wire is wound on the spindle. The wires can be subjected to both tensile stress and pressure, and a separate wire, spindle, motor arrangement is connected is to the first and second rotor blade parts, respectively, for the purpose of shifting the rotor blade parts in and out relative to each other.

A disadvantage of the device shown FIGURE 5 of Eikelenboom is that the first rotor blade into which the second blade part slide must be completely hollow in order to accommodate the shape of the second blade. In modern large-scale turbine the blades are of such a size that reinforcing rib supports are necessary to obtain strength in large-scale wind and water current applications. The cable mechanism itself is not suitable for large scale turbines because the wires must be capable of being subjected to both tensile stress and pressure and such cables are not available for moving heavy objects.

As can be seen from the above descriptions, in the prior art it is known that the length of a blade can be adjusted such that the wind-braking area is varied. A disadvantage of the prior art devices is the number of component parts, which makes the devices complex to build, to service and to repair.

US patent 6,726,439 of Geoffrey F. Deane and Amir S. Mikhail granted 4/27/2004 entitled "Extendable Rotor Blades For Power Generating Wind And Ocean Current Turbines And Means For Operating Below Set Rotor Torque Limits", discloses a control for extendable rotor blades but does not describe in detail a mechanism for extending and retracting a rotor blade on a wind or water current driven turbine.

US 2003/223868 discloses a wind turbine blade made of a fixed blade section and a moveable blade section, the latter is attached to the fixed blade section and is free to move in a longitudinal direction relative to the fixed blade section. A positioning device controllably positions the moveable blade section to vary the overall length of the blade. This allows the wind turbine's rotor diameter to be adjusted.

WO 2005/017351 discloses a system and method for changing wind turbine rotor diameters to meet changing wind speeds. The rotor blades on the wind turbine are able to adjust length by an extension nested within or containing the base blade. The blades can have more than one extension in a variety of configurations.

Prior mechanisms for moving the extension (blades) of variable diameter rotor blades have used endless belts, wire cables, and lead-screw mechanisms attached to the extender blade.

Endless belts have the disadvantage of having to extend to the distal end of the main blade in order to effect the desired maximum of longitudinal movement, are complex to manufacture and add undesired additional weight to the outer reaches of the main blade.

Wire cables have the disadvantage of requiring two cables, one to move the extender blade out and one to pull the extender blade in. Also the cables are heavy for required strength, have to extend to the distal end of the main blade in order to effect the desired extent of longitudinal movement, are complex to manufacture and add undesired additional weight to he outer reaches of the main blade.

Lead screw mechanisms incorporate a slider nut driven by a threaded lead screw. Lead screw mechanisms are heavy for required strength, require a heavy reversible motor whose torque needs to be sufficient with a good safety margin to turn the lead screw under maximum load; have to extend to the distal end of the main blade in order to effect the desired longitudinal movement; are complex to manufacture; add undesired additional weight to the outer reaches of the main blade and tend to bind-up during operation, thereby adding to maintenance costs.

What is needed is a mechanism for wind or ocean current turbines which will facilitate extension and retraction of extendible rotor blades and which is lightweight, easily maintainable, and durable.

What is also needed is an extendible rotor blade structure which facilitates maintenance and/or replacement of the blade structure.

### SUMMARY OF THE INVENTION

The problems cited above are solved by an extendible rotor blade structure, which comprises a base blade module including a base blade module beam and an extender blade module including an extender blade module beam, which is connected to the base blade module beam. Said extender blade module comprises a carrier blade, which is connected to the base blade module and an extender blade, which is housed in the carrier blade and rides on the extender blade module beam for extension and retraction.

The extender blade is connected to the extender blade module beam by linear bearing cars and respective guiding rails, and the extender blade module is detachably connected to the base blade module for easy access for servicing and maintenance, providing a modular extendible rotor blade structure.

Almost all features for extension and retraction are arranged within the extender blade module. It is very likely that a malfunction will occur in this module of the blade since all fault-prone elements are located in this module. As this module is detachably connected to the base blade module maintenance and / or replacement of the of the blade part including the mechanism for extending / retraction is facilitated. In other words, the invention is based on the concept of arranging all fault-prone elements in a small part of the blade and connecting this small part detachably at the remaining part of the blade.

Further aspects of the extendible rotor blade structure are set forth in the dependent claims.

A suitable turbine is mounted on a structure (such as a tall wind tower or a tethered underwater nacelle) that is held stationary in the horizontal axis with reference to the fluid flow. The turbine includes a rotor having a main blade connected to a rotor hub and an extender blade. The extender blade is moveable between a retracted position relative to the main blade and to a more exposed position to expose more or less of the rotor to fluid flow. An adjusting device for the extender blade includes a number of linear-bearing cars connected to the extender blade that run along a rail within the main blade. A generator is connected to the turbine for generating electrical energy.

In accordance with a further aspect of the invention, a fluid-flow power generating system is provided. The power generating system comprises a turbine mounted on a structure that is held stationary with reference to a fluid flow and said turbine comprises a rotor and is positioned on said structure such that said rotor is in alignment with fluid flow direction. Furthermore, said rotor comprises at least one extendable rotor blade structure in accordance with the present invention.

### BRIEF DESCRIPTION OF THE DRAWINGS

The invention will be described in detail with reference to the drawings in which:
FIGURE 1 is a perspective view of a rotor blade of the present invention comprising a base section, a carrier and extender making up an extender module, with an extendible rotor blade fully extended;
FIGURE 2 is a view of the extender module beam within the base blade, showing the base blade beam with the attachment end of the extender module attached thereto;
FIGURE 3 is a view of the extender module beam and the base blade beam (spar)
of FIGURE 2 with the aluminium spar bolted inside the blade spar;
FIGURE 4 is a more detailed view of the apparatus shown in FIGURE 2 showing the beam of the carrier airfoil shell, the carrier airfoil shell itself, the base module, and the attachment joint of the carrier module to the base module;
FIGURE 5 is a more detailed view of the apparatus shown in FIGURE 4 showing the beam of the carrier airfoil shell with the linear cars attached to the carrier beam, the guide rails for the linear bearings, the carrier airfoil shell itself, carrier module face plate, and the attachment joint of the carrier module to the base module;
FIGURE 6 is a cut-away diagram of the apparatus shown in FIGURE 5;
FIGURE 7 is a cross-sectional diagram of the apparatus shown in FIGURE 5 showing the downstream extender shell, the upstream extender shell and the gap therebetween, the carrier airfoil shell itself, the carrier beam, and the bearings attached to the extender rider beams of each extender shell;
FIGURES 8 is a cross-sectional diagram similar to FIGURE 7 showing an alternate embodiment;
FIGURE 9 is a diagram of the slot on top of the extender blade that is filled with a metal tape, zipper, or rubber closure;
FIGURE 10 is a diagram of a wind turbine tower illustrating how the extended blade module is lifted by a hoist in the nacelle; and,
FIGURE 11 is a diagram of a quick-release attachment mechanism for the extender blade module.

In these figures, similar numerals refer to similar elements in the drawings. It should be understood that the sizes of the different components in the figures may not be to scale, or in exact proportion, and are shown for visual clarity and for the purpose of explanation.

### DESCRIPTION OF THE PREFERRED EMBODIMENTS

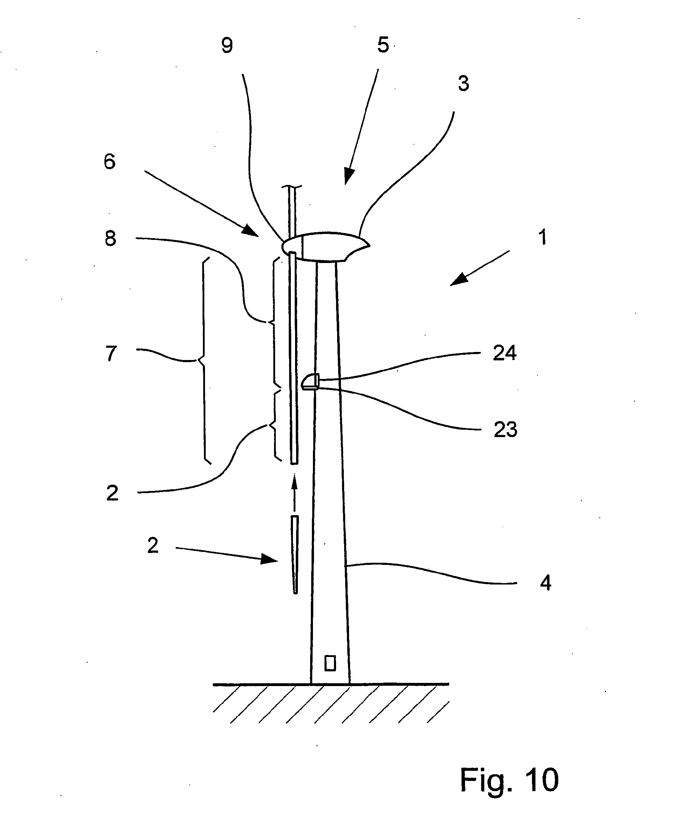

Refer to FIGURE 10, which is a diagram of a wind turbine tower 1 illustrating how the extended blade module 2 is lifted by a hoist in the nacelle 3. A wind power-generating device includes an electric generator housed in a turbine nacelle 3, which is mounted atop a tall tower structure 4 anchored to the ground. The turbine 5 is free to rotate in the horizontal plane such that it tends to remain in the path of prevailing wind current. The turbine has a rotor 6 with variable pitch blades 7, which rotate in response to wind current. Each of the blades has a blade base section 8 referred to as a root blade attached to a rotor hub 9 and a blade extension referred to as an extender blade 2 that is variable in length to provide a variable diameter rotor. The rotor diameter is controlled to fully extend the rotor 6 at low flow velocity and to retract the rotor as flow velocity increases such that the loads delivered by or exerted upon the rotor do not exceed set limits. The wind power-generating device is held by the tower structure 4 in the path of the wind current such that the power-generating device is held in place horizontally in alignment with the wind current. An electric generator is driven by the turbine to produce electricity and is connected to power carrying cables inter-connecting the generator to other units and/or to a power grid.

Power capture from wind and ocean current turbines is directly proportional to the cross-sectional area swept by the turbine's rotor blades, Conventional rotors utilize blades of fixed length, joined at a rotating hub. These blades may be of variable pitch (selectively rotatable about their longitudinal axes) in order to alter the angle of attack relative to the incoming fluid flow, principally for power shedding in high flow velocities. Alternatively, these blades may be fixed pitch or stall-regulated, wherein blade lift and therefore power capture falls off dramatically as wind speeds exceed some nominal value. Both variable pitch and stall regulated rotor blades with fixed diameters are well known in the art. The above-identified US Patent 6,726,439 B2 describes a wind or water flow energy converter comprising a wind or water flow actuated rotor assembly. The rotor comprises a plurality of blades, wherein the blades are variable in length to provide a variable diameter rotor. The rotor diameter is controlled to fully extend the rotor at low flow velocity and to retract the rotor as flow velocities increases such that the loads delivered by or exerted upon the rotor do not exceed set limits.

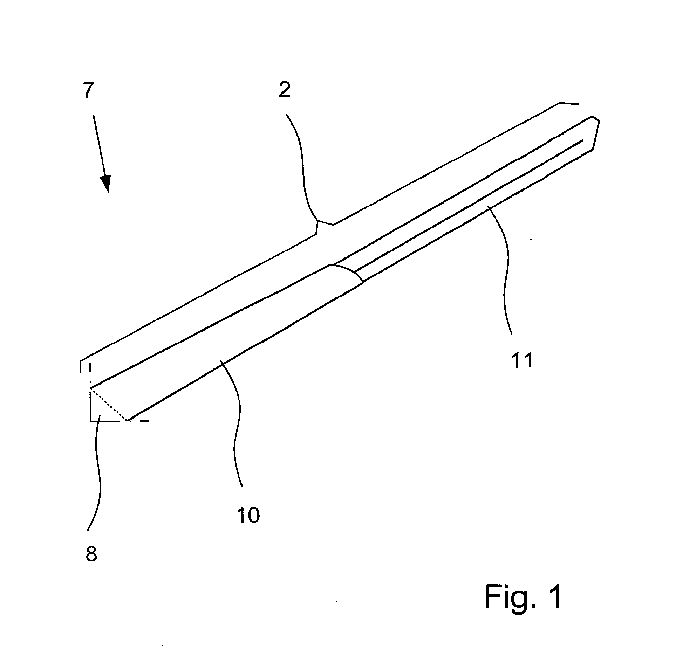

Refer to FIGURE 1, which is a perspective view of a rotor blade 7 of the present invention comprising a base section 8, a carrier 10 and extender 11 making up an extender module 2, with an extendible rotor blade 7 fully extended. A rotor has a root blade (base section 8 of the blade) and an extender blade 11. An optional friction brake is supplied to lock the extender module beam when the extender blade 11 is in a desired position. For safety, the brake is applied when not activated and is released when activated by a hydraulic system or other activation system. Hence the brake is always in a fail-safe condition.

This invention relates to a method and apparatus of providing structural support for a wind turbine blade 7 which has a detachable outer aerodynamic module 2 with a telescoping feature which, when extended out, increases the rotor diameter and captures more wind energy during periods of lower winds, and telescopes in (retracts) to reduce wind energy exposure in higher winds.

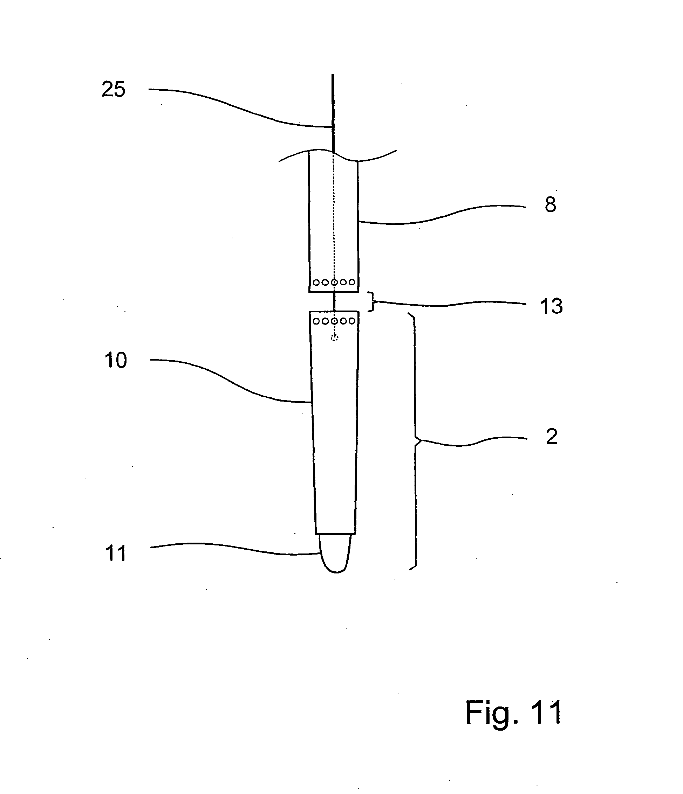

Refer to FIGURE 11, which is a diagram of a quick-release attachment mechanism 13 for the extender blade module 2. The telescoping blade portion 2 is designed as a module (FIGURE 1) that can be attached or detached from the base blade 8 for servicing, as shown in FIGURE 11. This is an important feature since a telescoping blade system 2, which does not detach from the base blade 8 would be problematic in servicing and replacement.

The basis for developing the structural system of the present invention is that the airfoil shell has a cross-sectional shape, which is not suitable for structural adaptation to a telescoping action as would a perfectly tubular shape, particularly given the forces acting on the blade from wind thrust, gravity and centrifugal force. The structural system therefore is intended to provide support for the airfoil shell by extending the structural beam (or spar) of the base blade 8 through to the telescoping module 2 of the blade, both when it is retracted and extended.

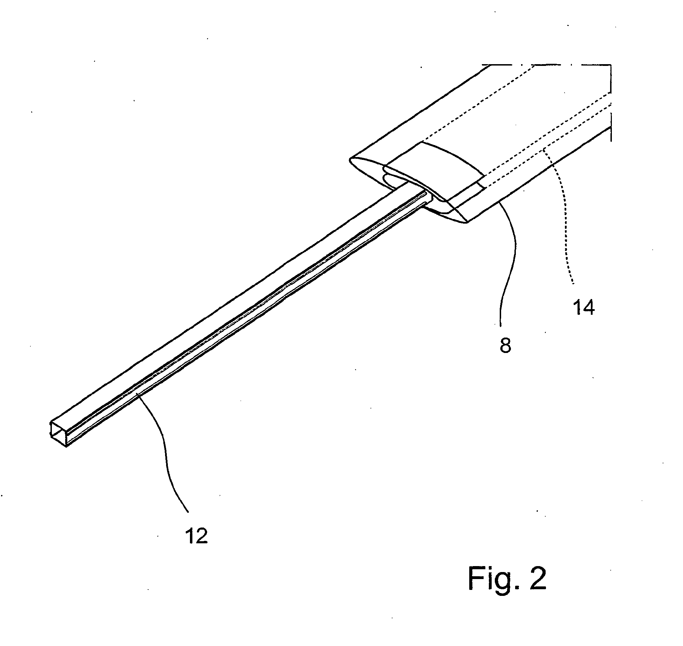

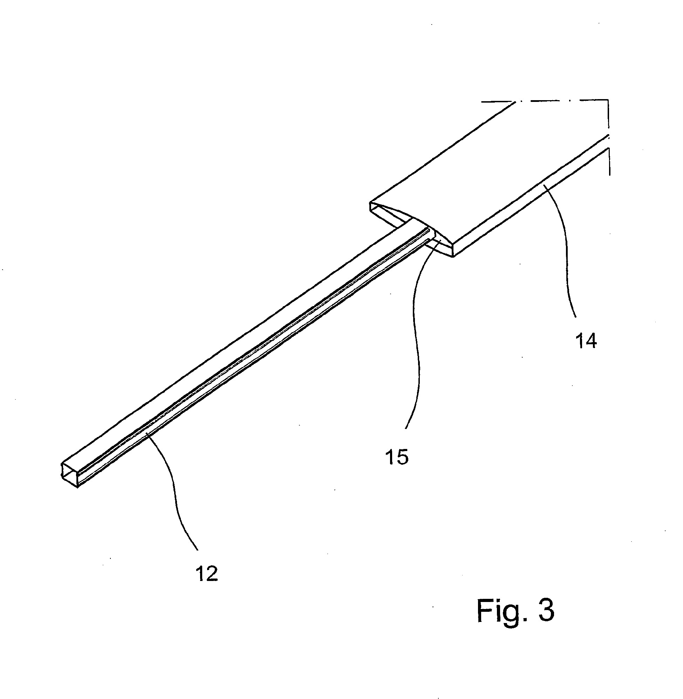

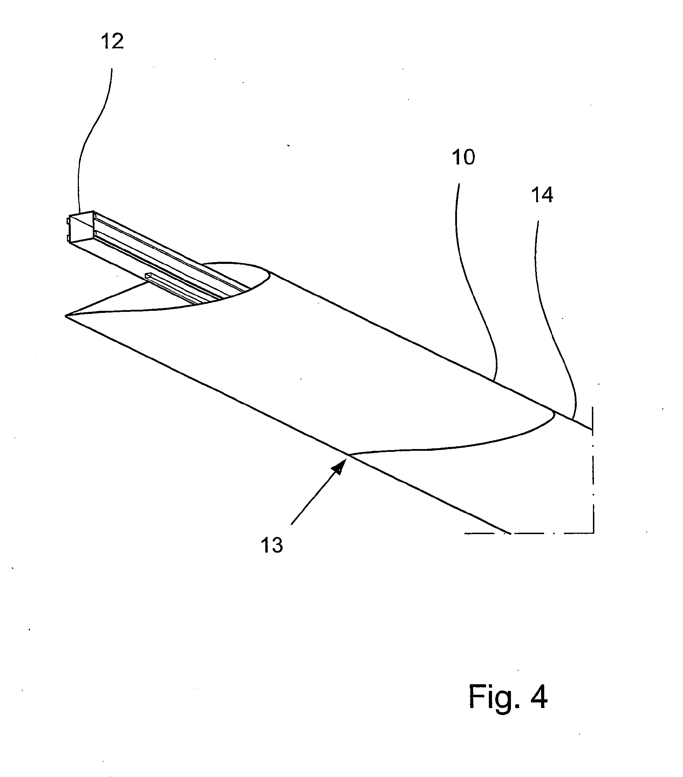

Refer to FIGURES 2-4, which illustrate the extender module beam 12 within the base blade, showing the base blade beam 14 with the attachment end of the extender module attached thereto, the beam 12 of the carrier airfoil shell 10, the carrier airfoil shell itself, the base module 8, 14, and the attachment joint 13 of the carrier module 10, 12 to the base module. The structural elements can be either of embodiments a, b or c described below:
a. An extender blade module beam 12 (FIGURE 2) that extends from the module attachment end, mounts to the attachment faceplate 15 (FIGURE 3), and extends through the carrier airfoil shell 10 (FIGURE 4). This design does not have the beam 12 attached to either the top inside or bottom inside of the carrier airfoil shell 10.

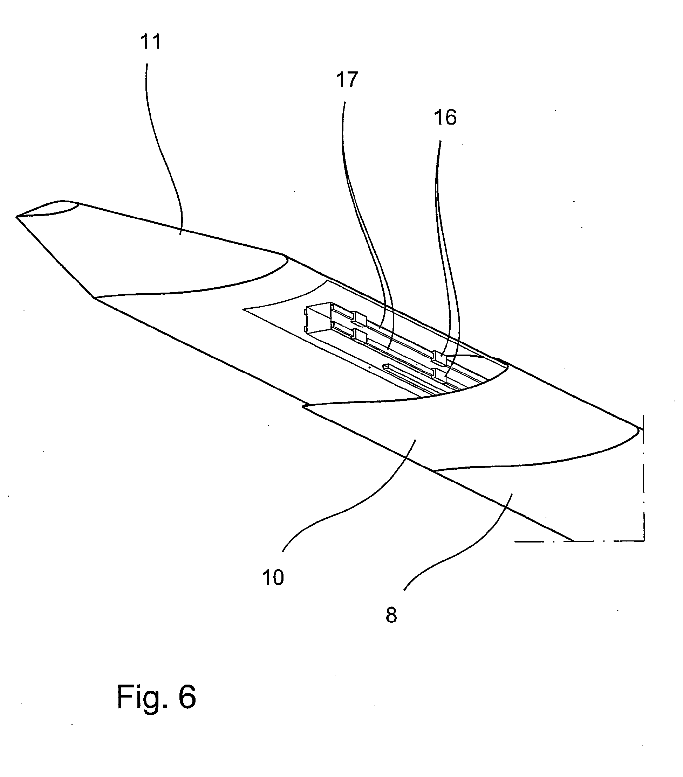

Refer to FIGURE 5, which is a more detailed view of the apparatus shown in FIGURE 4 showing the beam 12 of the carrier airfoil shell 10 with the linear cars 16 attached to the carrier beam 12, the guide rails 17 for the linear bearings 16, the carrier airfoil shell 10 itself, carrier module face plate 19, and the attachment joint 13 of the carrier module 10, 12 to the base module 8, 14 and to FIGURE 6, which is a cut-away diagram of the apparatus shown in FIGURE 5.

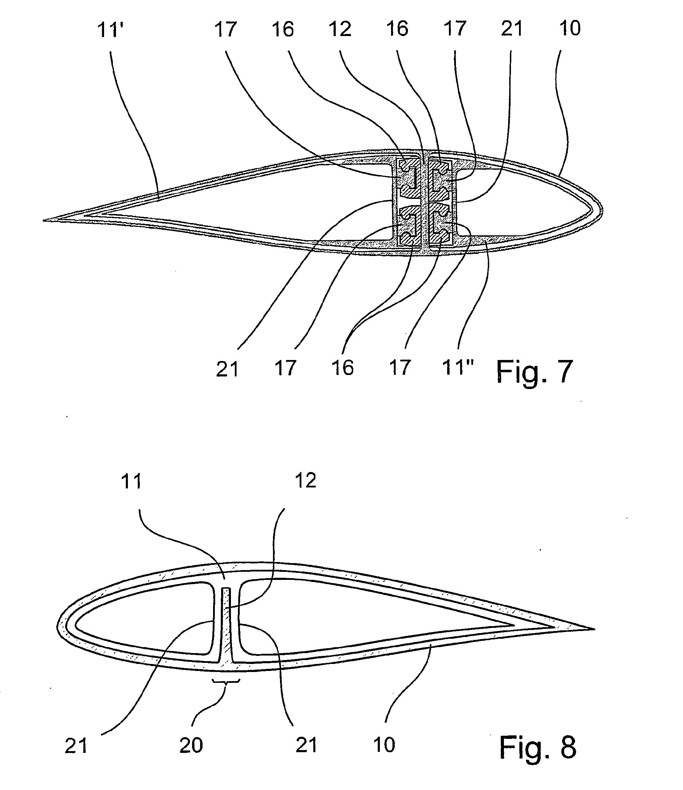

The only structural support the carrier airfoil 10 has is at the module attachment end face place 19 (FIGURE 5) and at the end where the carrier module 10, 12 overlaps with the extender blade 11, and there, riding on the extender blade airfoil shell, which contains the extender beam which overlaps with the module carrier beam sliding over each in extension or retraction operations.
b. An alternate structure (FIGURE 8) is a carrier beam 12 attached only to the lower inside of the carrier airfoil shell 10 of the module, and dual or "rider" beams of the extender shell airfoil 11 riding on the carrier 12 beam and attached to the upper inside of the extender airfoil. This results in a slot 20 running lengthwise on the bottom surface of the extender airfoil to accommodate the beam of the carrier section of the module.
c. Refer to FIGURE 7, which is a cross-sectional diagram of the apparatus shown in FIGURE 5 showing the downstream extender shell 11', the upstream extender shell 11" and the gap there between, the carrier airfoil shell 10, the carrier beam 12, and the bearings 17 attached to the extender rider beams 21 of each extender shell. The carrier beam 12 is attached to the inside of the upper and lower airfoil shell 10 of the "carrier" section with the extender airfoil 11 in the form of a split chord airfoil resulting in a two-piece airfoil with front (upstream extender shell 11''), and back (downstream extender shell 11') sections and each containing a "rider" beam 21, which slides on the vertical carrier beam 12. This also results in a lengthwise slot or gap on both the top and bottom of the extender airfoil 11 between the front section 11" of the airfoil and the rear section 11' of the split airfoil of the extender.

This results in a structure wherein the extender blade module beam 12 is in the form of a wall, an upper and/or lower edge of the wall being connected to the carrier blade 10, the extender blade 11 being divided by the wall into an upstream extender shell 11' and a downstream extender shell 11".

The carrier beam 12 (FIGURE 2) and the adjacent rider beams 21 have linear bearing cars 16 (FIGURE 7) as an interface. The linear bearing cars 16 are attached to the inner beam 12 of the main blade 10 and the car tracks 17 upon which the cars ride are attached to the rider beam 21 of the retractable tip blades 11', 11" . There is a 1.5M overlap between the two blades. The tip blades consist of a leading edge section 11" and a trailing edge section 11' that are connected by the blade tip, resulting in a split-air foil extender 11.

The split airfoil extender 11 may have a mechanism to mechanically interlink the front airfoil section 11" and the rear airfoil section 11' as the outer element of the blade is extended, and to mechanically unlink as the blade is retracted.

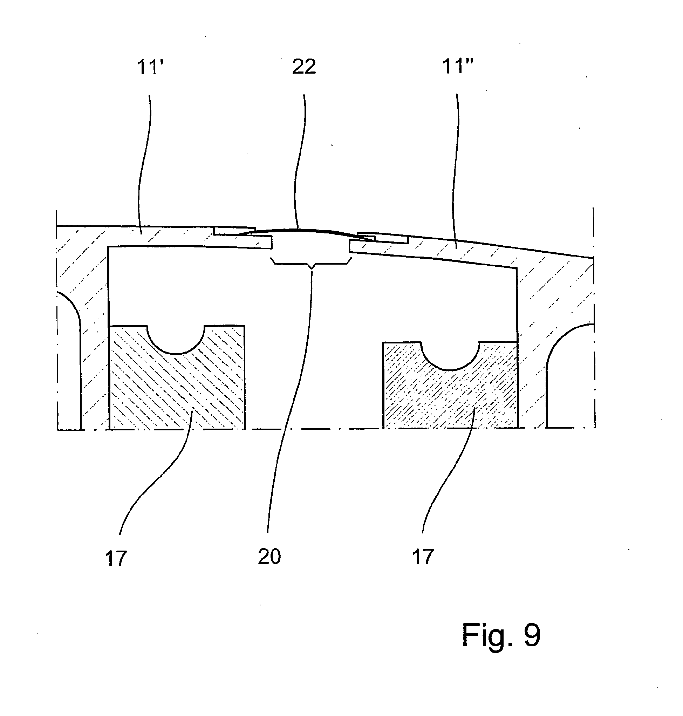

In either case b or c above, the extender blade 11 (FIGURES 7 and 8) has lengthwise slots 20 which would deteriorate airfoil effectiveness. Refer to FIGURE 9, which is a diagram of the slot 20 on top of the extender blade 11 that is filled with a metal tape, zipper, or rubber closure 22. A key feature of this design is the use of thin steel or plastic strip (similar to a measuring tape) that fills the slots of the airfoil 11 as it is extended, and retracts or rolls up as the outer blade is retracted. An alternate method of maintaining airfoil aerodynamic efficiency is with a zipper, which closes to fill the lengthwise slot as the outer blade 11 is extended, and also to open the zipper as the outer blade retracts. The zipper may be of a web material such as fabric with zipper teeth or overlapping rubber strips which are moved out of the way by the action of the extender blade 11.

In both cases the outer beams 21 slide on the inner beam 12 and when fully extended the inner and outer beams overlap sufficiently to transfer the structural support to the extended outer blade 11 while maintaining an aerodynamically efficient shape.

As shown in FIGURE 11, the module can attach to the base blade through a quick release mating system 13 that transfers the structural support of the beam of the base blade to the beam of the module. The base blade also has electric power and control wiring that connects to the module to drive the mechanism and to perform control functions.

As shown in FIGURE 10, access to the module attachment area of the base blade is through a port 23 and fold-down hatch 24 in the wind turbine tower 4 which, when opened, extends a ramp for servicing and module replacement. Removal or attachment of the module 2 is assisted by an on-board hoist in the nacelle 3 of the turbine 5, feeding a hoist cable 25 through the turbine rotor hub 9 down through the main blade 8 to quick-release attachment points 13 on the module (FIGURE 11).

### Turbine Control Unit

United States Patent 6,726,439 to Mikhail, et al. granted April 27, 2004 for "Retractable rotor blades for power generating wind and ocean current turbines and means for operating below set rotor torque limits" discloses a wind turbine in which the rotor comprises a plurality of blades, wherein the blades of are variable in length to provide a variable diameter rotor.

In patent 6,726,439 the rotor diameter is controlled to fully extend the rotor at low flow velocity and to retract the rotor as flow velocity increases such that the loads delivered by or exerted upon the rotor do not exceed set limits. The mechanical torque (or thrust) delivered by the rotor is controlled such that the torque (or thrust) is limited to below a threshold value. This has the advantage of enabling an extended rotor blade configuration to operate within adjustable torque and thrust load limits. This enables adaptation to a multitude of wind turbine powertrain manufacturers' designs or to a variety of operating conditions through use of different control set points, and similarly enables retrofit of existing installed wind turbines.

The control system governs the variable rotor radius, the pitch of the rotor blades, and the rotational rate of the rotor, using one or more of the following sensor inputs:
measurement of power output;
measurement of rotor rotational velocity;
measurement of rotor torque;
measurement of extendable rotor blade position;
measurement of rotor blade pitch angle;
measurement of rotor blade bending load; and,
measurement of bending loads upon a support structure.

The Turbine Control Unit performs control functions in accordance with the methods described in US patent 6,726,439. That is, a control method controls the rotor system to operate within four regions. A first of the regions being at velocities below cut-in, a second of the regions being over a range of intermediate velocities which yield varying power production, and a third of the regions being at higher velocities in which the turbines produce constant or slightly decreasing power in order to limit loads, and a fourth of the regions being at extremely high velocities in which the turbines cut-out.

In addition, the control method controls the rotor system to operate within a fifth region in which rotor diameter is varied by sending signals over a bus to the linear cars to maintain operation within a specified loads regime. The specified load regime may be such that, in all wind or water flow velocities below a flow velocity required to reach rated power, the rotor diameter is extended to a maximum diameter permissible to remain within specified rotor load limits. The rotor load limits may be, for example, limitations on rotor thrust and/or shaft torque. To allow axial movement of the extendible rotor blade the two brakes must be deactivated by signals.

While the invention has been particularly shown and described with reference to preferred embodiments thereof, it will be understood by those skilled in the art that the foregoing and other changes in form and detail may be made therein without departing from the scope of the invention as defined by the appended claims.

## Claims

1. An extendible rotor blade structure, comprising:
a base blade module (8) including a base blade module beam (14); and
an extender blade module (2) including an extender blade module beam (12), which is connected to the base blade module beam (14);
said extender blade module (2) comprising a carrier blade (10), which is connected to the base blade module (8) and an extender blade (11), which is housed in the carrier blade (10) and rides on the extender blade module beam (12) for extension and retraction;
**characterized in that**
the extender blade (11) is connected to the extender blade module beam (12) by linear bearing cars (16) and respective guiding rails (17), and
that the extender blade module (2) is detachably connected to the base blade module (8) for easy access for servicing and maintenance, providing a modular extendible rotor blade structure.

2. The structure according to claim 1, wherein the linear bearing cars (16) are carried by the extender blade module beam (12).

3. The structure according to one of the claims 1 or 2,
wherein the extender blade module beam (12) is free from contact with the carrier blade (10).

4. The structure according to one of the claims 1 or 2,
wherein the extender blade module beam (12) is in the form of a wall, an upper or a lower edge of said wall being connected to the carrier blade (10).

5. The structure according to one of the claims 1 or 2,
wherein the extender blade module beam (12) is in the form of a wall, an upper and a lower edge of said wall being connected to the carrier blade (10), the extender blade (11) being divided by said wall into an upstream extender shell (11') and a downstream extender shell (11").

6. The structure according to claim 4 or 5, comprising means (22) for closing the gap (20) or the gaps of the extender blade (11) in an extended position.

7. A fluid-flow power generating system comprising:
a turbine mounted on a structure that is held stationary with reference to a fluid flow;
said turbine comprising a rotor and being positioned on said structure such that said rotor is in alignment with fluid flow direction; and
said rotor comprises at least one extendable rotor blade structure according to one of the claims 1 to 6.

## Patentansprüche

1. Eine ausfahrbare Rotorblattstruktur, aufweisend:
ein Basis-Blattmodul (8) mit einem Basis-Blattmodulträger (14), und
ein Extender-Blattmodul (2) mit einem Extender-Blattmodulträger (12), welcher mit dem Basis-Blattmodulträger (14) verbunden ist,
wobei das Extender-Blattmodul (2) ein Trägerblatt (10), welches mit dem Basis-Blattmodul (8) verbunden ist, und ein Extender-Blatt (11) aufweist, welches in dem Trägerblatt (10) untergebracht ist und zum Ausfahren und Einziehen auf dem Extender-Blattmodulträger (12) gleitet,
**dadurch gekennzeichnet,**
**dass** das Extender-Blatt (11) mit dem Extender-Blattmodulträger (12) über Linearlager-Gleitelemente (linear bearing cars) (16) und entsprechende Führungsschienen (17) verbunden ist, und
**dass** das Extender-Blattmodul (2) lösbar mit dem Basis-Blattmodul (8) für einen einfachen Zugriff zum Warten und Unterhalten verbunden ist, wodurch eine modulare ausfahrbare Rotorblattstruktur bereitgestellt ist.

2. Die Struktur nach Anspruch 1, wobei die Linearlager-Gleitelemente (16) von dem Extender-Blattmodulträger (12) getragen sind.

3. Die Struktur nach Anspruch 1 oder 2, wobei der Extender-Blattmodulträger (12) nicht in Kontakt mit dem Trägerblatt (12) steht.

4. Die Struktur nach Anspruch 1 oder 2, wobei der Extender-Blattmodulträger (12) in Form einer Wand ausgebildet ist, wobei eine untere oder obere Kante der Wand mit dem Trägerblatt verbunden ist.

5. Die Struktur nach Anspruch 1 oder 2, wobei der Extender-Blattmodulträger (12) die Form einer Wand aufweist, wobei eine untere und obere Kante der Wand mit dem Trägerblatt (10) verbunden ist, wobei das Extender-Blatt (11) durch die Wand in eine Extender-Anströmhülle (11') und eine Extender-Abströmhülle (11") unterteilt ist.

6. Die Struktur nach Anspruch 4 oder 5, aufweisend Mittel (22) zum Schließen einer Lücke (20) oder der Lücken des Extender-Blattes (11) in einer ausgefahrenen Stellung.

7. Ein energieerzeugendes Fluidströmungssystem, aufweisend:
eine auf einer Struktur, die in Bezug auf eine Fluidströmung stationär gehalten wird, montierte Turbine,
wobei die Turbinen einen Rotor umfasst und derart auf der Struktur angeordnet ist, dass der Rotor an der Fluidströmungsrichtung ausgerichtet ist, und
wobei der Rotor zumindest eine ausfahrbare Rotorblattstruktur gemäß einem der Ansprüche 1 bis 6 aufweist.

## Revendications

1. Structure de pale de rotor extensible,
comprenant :
un module de pale de base (8) comprenant une poutre module de pale de base (14) ; et
un module de pale extensible (2) comprenant une poutre module de pale extensible (12), qui est raccordée à la poutre module de pale de base (14) ;
ledit module de pale extensible (2) comprenant une pale porteuse (10), qui est raccordée au module de pale de base (8) et une pale extensible (11), qui est logée dans la pale porteuse (10) et se déplace sur la poutre module de pale extensible (12) pour une extension et une rétraction ;
**caractérisée en ce que**
la pale extensible (11) est raccordée à la poutre module de pale extensible (12) par des chariots de support linéaires (16) et des rails de guidage respectifs (17), et
le module de pale extensible (2) est raccordé de manière amovible au module de pale de base (8) pour avoir un accès aisé pour l'entretien et la maintenance, ce qui permet d'obtenir une structure de pale de rotor extensible modulaire.

2. Structure selon la revendication 1, dans laquelle les chariots de support linéaires (16) sont supportés par la poutre module de pale extensible (12).

3. Structure selon l'une quelconque des revendications 1 ou 2, dans laquelle la poutre de pale extensible (12) est exempte de tout contact avec la pale porteuse (10).

4. Structure selon l'une quelconque des revendications 1 ou 2, dans laquelle la poutre module de pale extensible (12) a la forme d'une paroi, un bord supérieur ou un bord inférieur de ladite paroi étant raccordé à la pale porteuse (10).

5. Structure selon l'une quelconque des revendications 1 ou 2, dans laquelle la poutre module de pale extensible (12) a la forme d'une paroi, un bord supérieur et un bord inférieur de ladite paroi étant raccordés à la pale porteuse (10), la pale extensible (11) étant divisée par ladite paroi en une coque extensible amont (11') et une coque extensible aval (11").

6. Structure selon la revendication 4 ou 5, comprenant des moyens (22) pour fermer l'intervalle (20) ou les intervalles de la pale extensible (11) en position d'extension.

7. Système de génération d'énergie hydraulique comprenant :
une turbine montée sur une structure qui est maintenue stationnaire par rapport à un flux de fluide ;
ladite turbine comprenant un rotor et étant positionnée sur ladite structure de sorte que ledit rotor soit dans l'alignement avec la direction du flux de fluide ; et
ledit rotor comprend au moins une structure de pale de rotor extensible selon l'une quelconque des revendications 1 à 6.
